Europäisches Patentamt

European Patent Office

Office européen des brevets

(11) Veröffentlichungsnummer: **0 298 437**
**A2**

(12) **EUROPÄISCHE PATENTANMELDUNG**

(21) Anmeldenummer: 88110757.7

(22) Anmeldetag: 06.07.88

(51) Int. Cl.⁴: **F04D 29/04 , F04D 29/58 ,
H01S 3/03**

(30) Priorität: 10.07.87 DE 3722791

(43) Veröffentlichungstag der Anmeldung:
11.01.89 Patentblatt 89/02

(84) Benannte Vertragsstaaten:
DE FR GB

(71) Anmelder: **Fortuna-Werke Maschinenfabrik
GmbH
Pragstrasse 140
D-7000 Stuttgart 50(DE)**

(72) Erfinder: **Jesinger, Richard
Faissstrasse 11
D-7300 Esslingen(DE)**

(74) Vertreter: **Witte, Alexander, Dr.-Ing.
Schickhardtstrasse 24
D-7000 Stuttgart 1(DE)**

(54) **Gebläse zum Umwälzen grosser Gasmengen für Hochleistungs-Laser nach dem
Gastransport-Prinzip.**

(57) Ein Gebläse (10) dient zum Umwälzen großer
Gasmengen für Hochleistungs-Laser nach dem
Gastransport-Prinzip. In einem raumfesten Gehäuse
(11) ist ein Rotor (50) drehbar angeordnet. Im Gehäuse (11) ist eine Gasführungsstrecke (15) ausgebildet, die abschnittsweise über gegeneinander rotierende Förderelemente (65, 66) des Gehäuses (11)
und des Rotors (50) führt und über eine zentrale
Bohrung (56) des Rotors (50) zu einer Endlosstrecke
vervollständigt ist.

Um die Lagereigenschaften des Gebläses zu
verbessern und einen besonders einfachen, eleganten Aufbau zu erreichen, ist der Rotor (50) beidendig in Radial-Gaslagern (52/51/54, 40/59/60) sowie in
einem Axial-Gaslager (33/52/53/56) gehalten. Gehäusefeste Lagerschalen (31, 37) der Gaslager
(32/51/54, 40/59/60, 33/52/53/56) sind über als Leitschaufeln (30, 36) ausgebildete Stützen mit dem
Gehäuse (11) verbunden. Die Förderelemente (65,
66) sind als Axialgebläse zwischen den Lagerschalen (31, 37) angeordnet.

## Gebläse zum Umwälzen großer Gasmengen für Hochleistungs-Laser nach dem Gastransport-Prinzip

Die Erfindung betrifft ein Gebläse zum Umwälzen großer Gasmengen für Hochleistungs-Laser nach dem Gastransport-Prinzip, mit einem raumfesten Gehäuse, in dem ein Rotor drehbar angeordnet ist, wobei im Gehäuse eine Gasführungsstrecke ausgebildet ist, die abschnittsweise über gegeneinander rotierende Förderelemente des Gehäuses und des Rotors führt und über eine zentrale Bohrung des Rotors zu einer Endlosstrecke vervollständigt ist.

Ein derartiges Gebläse ist in einem Bericht des Battelle-Instituts e.V. "Eurolaser Definitionsphase $CO_2$-Laser" beschrieben.

Das genannte Gebläse weist ein Rotorteil mit horizontaler Rotorachse auf. Das Rotorteil ist an einem Ende mit einer Antriebswelle in einem Gaslager eines raumfesten Gehäuses gelagert und kragt frei nach außen. In dem an die Antriebswelle grenzenden Wandbereich des Gehäuses sind Turbinenschaufeln eines Radialgebläses am Gehäuse bzw. am Rotor angeordnet. Das umzuwälzende Gas strömt in radialer Richtung durch die gegeneinander rotierenden Förderelemente des Radialgebläses nach außen und wird über eine gebogene Gasführungsstrecke an der Außenwand des Gehäuses zum gegenüberliegenden freien Ende des Rotors zurückgeführt, wo es über Umkehrabschnitte im Gehäuse in die zentrale Bohrung des Rotors zurückgeführt wird.

Das vorstehend beschriebene Gebläse bedarf aufgrund seiner einendigen Lagerung einer sehr aufwendigen Konstruktion, um die für die Gasumwälzung in Hochleistungs-Lasern erforderlichen hohen Drehzahlen bzw. Gasförderraten gewährleisten zu können. Dies kann jedoch bei einer einendigen Lagerung kaum erreicht werden, weil eine gewisse Durchbiegung des Rotors infolge des Eigengewichts nicht ausgeschlossen werden kann, so daß eine Unwucht im Rotor zumindest nach längerer Betriebsdauer befürchtet werden muß.

Der Erfindung liegt demgegenüber die Aufgabe zugrunde, ein Gebläse der vorstehend beschriebenen Art dahingehend weiterzubilden, daß auch bei extrem hohen Drehzahlen eine zuverlässige Lagerung bei einfacher Bauweise gewährleistet ist.

Diese Aufgabe wird erfindungsgemäß dadurch gelöst, daß der Rotor beidendig in Radial-Gaslagern sowie in einem Axial- Gaslager gehalten ist, daß gehäusefeste Lagerschalen der Gaslager über als Leitschaufeln ausgebildete Stützen mit dem Gehäuse verbunden sind und daß die Förderelemente als Axialgebläse zwischen den Lagerschalen angeordnet sind.

Die der Erfindung zugrundeliegende Aufgabe wird auf diese Weise vollkommen gelöst, weil die beidendige Lagerung des Rotors die zuvor geschilderten mechanischen Nachteile vermeidet. Biegemomente treten nämlich beim erfindungsgemäß beidendig gelagerten Rotor nicht auf, zumal die als Axialgebläse ausgebildeten Förderelemente zwischen den Radiallagern angeordnet sind, was zusätzlich eine besonders kompakte Bauweise ergibt. Die Ausbildung der Stützen für die Lagerschalen als Leitschaufeln, die sich im Strom des umgewälzten Gases befinden, hat den Vorteil, daß ein doppelter Nutzen aus diesen Elementen gezogen wird, nämlich einmal, die Lagerschalen mechanisch abzustützen und zum anderen, den umzuwälzenden Gasstrom so zu lenken, daß er in aerodynamisch günstiger Weise auf die Förderelemente des Axialgebläses trifft.

Bei einer bevorzugten Ausgestaltung der Erfindung ist eine Lagerschale mit einer Statorwicklung versehen, die mit einer auf dem Rotor angeordneten Rotorwicklung zusammenwirkt, und ein zwischen Statorwicklung und Rotorwicklung vorhandener Luftspalt ist zugleich als Radial-Gaslager ausgebildet.

Diese Maßnahme hat den Vorteil, daß ebenfalls ein doppelter Nutzen aus dem Element "Luftspalt" gezogen wird, nämlich zu einen eine mechanische Stützfunktion und zum anderen eine elektrische Funktion für den Antrieb des Rotors.

Bei einer weiteren bevorzugten Ausgestaltung der Erfindung ist an einer Lagerschale ein Magnet mit einer ersten radialen Oberfläche angeordnet, der eine zweite radiale Oberfläche am Rotor gegenübersteht.

Diese Maßnahme hat den Vorteil, daß den unterschiedlichen axialen Kräften Rechnung getragen werden kann, die sich bei unterschiedlichen Drehzahlen des Rotors einstellen. Insbesondere kann dadurch vermieden werden, daß die Förderelemente des Axialgebläses in Berührung miteinander geraten, andererseits aber ein gewisses axiales Spiel vorhanden ist, um den Rotor reibungsfrei rotieren lassen zu können.

Bei einer bevorzugten Ausgestaltung dieses Ausführungsbeispiels ist der Magnet ein Permanentmagnet.

Diese Maßnahme hat den Vorteil, daß separate Stromzuführungsleitungen nicht erforderlich sind, und es ist den praktischen Bedürfnissen Genüge getan, weil eine vorbestimmte axiale Anziehungskraft ausreicht, um den Rotor bei niedrigen Drehzahlen mit seinen Förderelementen im Abstand von den gehäusefesten Förderelementen zu halten.

Schließlich ist noch ein Ausführungsbeispiel der Erfindung bevorzugt, bei dem die Leitschaufeln mit Kanälen zum Temperieren versehen sind.

Diese Maßnahme hat den Vorteil, daß die im Gasstrom befindlichen Leitschaufeln zugleich als Wärmetauscher zum Temperieren, insbesondere Kühlen, des umgewälzten Gases verwendet werden können, wenn durch die Kanäle ein entsprechend temperiertes Kühlmittel geleitet wird.

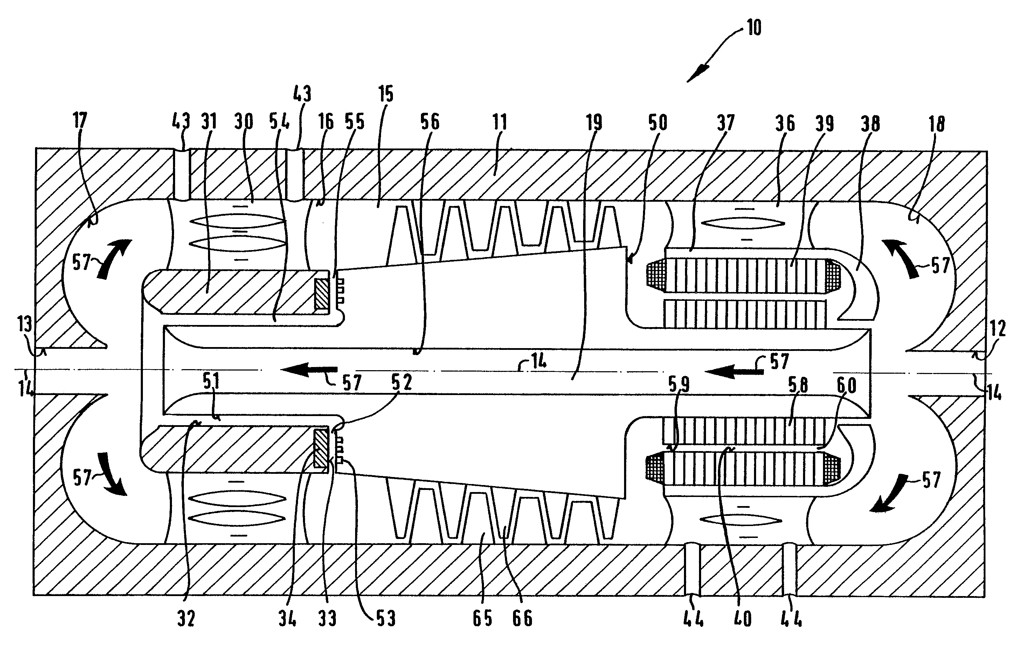

Weitere Vorteile ergeben sich aus der Beschreibung und der beigefügten Zeichnung.

Es versteht sich, daß die vorstehend geschilderten und die nachstehend noch erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert.

Die einzige Figur zeigt eine Querschnittsdarstellung, im Längsschnitt, durch ein Ausführungsbeispiel eines erfindungsgemäßen Gebläses.

In der Figur bezeichnet 10 insgesamt ein Gebläse zum Umwälzen großer Gasmengen, wie es für Hochleistungs-Laser verwendet werden kann. Derartige Gebläse für Hochleistungs-Laser sind in den europäischen Patentanmeldungen EP-A 0 232 546, EP-A 0 235 392 und 87 107 257.5 derselben Anmelderin beschrieben, und der Offenbarungsgehalt jener Anmeldungen wird durch diese Bezugnahme zum Offenbarungsgehalt der vorliegenden Anmeldung gemacht.

Das Gebläse 10 der Figur weist ein Statorgehäuse 11 von im wesentlichen liegend-zylindrischer Gestalt auf. Das Gehäuse 11 ist an seiner rechten Stirnfläche mit einer Öffnung 12 und an seiner linken Stirnfläche mit einer Öffnung 13 versehen. Durch die Öffnungen 12, 13 tritt ein Laserstrahl 14 hindurch, der von einem in der Figur nicht dargestellten Laser ausgesandt wird.

Eine insgesamt mit 15 bezeichnete Gasführungsstrecke umfaßt einen geraden Abschnitt 16 entlang der Außenwand des Gehäuses 11, der an beiden Stirnseiten des Gehäuses 11 in Umkehrschnitte 17 und 18 übergeht. Die Umkehrabschnitte 17, 18 münden in eine axial verlaufende Laser-Strecke 19, durch die der Laserstrahl 14 hindurchläuft.

In der linken Hälfte der Figure ist eine vordere, als Leitschaufel 30 ausgebildete Stütze zu erkennen, die eine zentral angeordnete Lagerschale 31 trägt. Die Lagerschale 31 ist mit einer ersten axialen Oberfläche 32 sowie einer radialen Oberfläche 33 versehen, in die ein Permanentmagnet 34 eingelassen ist.

Im rechten Teil der Figur erkennt man eine hintere, ebenfalls als Leitschaufel 36 ausgebildete Stütze, die eine Lagerschale 37 trägt. Die Lagerschale 37 geht zum Umkehrabschnitt 18 hin in Leitstücke 38 zur Führung des Gases über. Die Lagerschale 37 trägt ferner eine Statorwicklung 39 eines elektrischen Antriebes, die ihrerseits eine zweite axiale Oberfläche 40 aufweist.

Die Leitschaufeln 30, 36 sind mit Kanälen 43, 44 versehen, durch die, beispielsweise mittels eines mäanderartigen Kanalsystems in den Leitschaufeln 30, 36 ein Temperiermittel, insbesondere Kühlmittel, durch die Leitschaufeln 30, 36 geleitet werden kann.

Ein Rotor 50 ist zentral im Gehäuse 10 angeordnet und verfügt im Bereich der Lagerschale 31 über eine der ersten axialen Oberfläche 32 gegenüberstehende erste axiale Gegenfläche 51 sowie eine der radialen Oberfläche 33 gegenüberliegende radiale Gegenfläche 52, in die Spiralnuten 53 eingebracht sind.

Hierdurch entsteht ein erster axialer Luftspalt 54 zwischen den Flächen 32 und 51, in die in an sich bekannter Weise fischgrätartige Rillen eingebracht werden können, damit auf diese Weise ein Radial-Luftlager entsteht.

In entsprechender Weise befindet sich zwischen den radialen Flächen 33 und 52 ein radialer Luftspalt 55, der infolge der Spiralrillen 53 ein Axial-Luftlager bildet.

Im Bereich der rechten Lagerschale 37 ist am Rotor 50 eine Rotorwicklung 58 vorgesehen, die der Statorwicklung 39 gegenübersteht und mit einer zweiten axialen Gegenfläche 59 versehen ist, die der zweiten axialen Oberfläche 40 mit einem zweiten axialen Luftspalt 60 gegenübersteht. Auf diese Weise entsteht ein zweites Radial-Luftlager am rechten Ende des Rotors 50.

Der Rotor 50 ist schließlich mit einer zentralen Bohrung 56 versehen, die die Laser-Strecke 19 bildet. Das umzuwälzende Gas kann mithin entlang der eingezeichneten Pfeile 57 durch die Gasführungsstrecke 15, d.h. den geraden Abschnitt 16, den Umkehrabschnitt 17, die zentrale Bohrung 56, den Umkehrabschnitt 18 und wieder durch den geraden Abschnitt 16 im Kreise umgewälzt werden.

Um diese Umwälzung des Gases zu bewirken, sind am Gehäuse 11 gehäusefeste Förderelemente 65 und am Rotor 50 rotorfeste Förderelemente 66 vorgesehen, die nach Art eines Axialgebläses ausgebildet sind. Die Förderelemente 65, 66 stehen aerodynamisch mit den Leitschaufeln 30, 36 in Wirkverbindung, wobei die Leitschaufeln 30, 36 so positioniert und dimensioniert sind, daß sich zusammen mit den Förderelementen 65, 66 eine optimale Gebläsewirkung ergibt.

Bei Stillstand des Rotors 50 überwiegt in axialer Richtung die Kraft des Permanentmagneten 34, der den Rotor 50 in der Figur nach links zieht, wobei die Anordnung so getroffen ist, daß in diesem Falle die Förderelemente 65, 66 nicht miteinander in Berührung geraten.

Läuft nun der Rotor 50 mit mittleren Drehzahlen an, tritt die Wirkung des Axial-Spiralrillenlagers mit den Spiralrillen 53 in der radialen Gegenfläche 52 ein und bewirkt eine axiale Kraft auf den Rotor 50 nach rechts in der Figur.

Bei noch höheren Drehzahlen entsteht infolge der Wirkung der Förderelemente 65, 66 eine auf den Rotor 50 nach links in der Figur gerichtete dynamische Kraft.

Diese Kraftwirkungen sind so aufeinander abgestimmt, daß zu keinem Zeitpunkt die Förderelemente 65, 66 miteinander in Berührung geraten.

Auf diese Weise steht insgesamt ein Gebläse 10 zur Verfügung, das auf elegante Weise die Lager- und Förderprobleme für das Gas löst, wobei ein mehrfacher Nutzen aus Bauelementen dadurch gezogen wird, daß die Stützen für die Lagerschalen 31, 37 gleichzeitig als Leitschaufeln 30, 36, als Kühlelemente für das umgewälzte Gas sowie als mechanische Träger für den Rotor 50 genutzt werden. Ferner wird der durch die Wicklungen 39, 58 gebildete Elektromotor nicht nur als Motor, sondern auch als Radiallager genutzt, so daß auf diese Weise eine besonders einfache Bauweise entsteht.

## Ansprüche

1. Gebläse zum Umwälzen großer Gasmengen für Hochleistungs-Laser nach dem Gastransport-Prinzip mit einem raumfesten Gehäuse (11), in dem ein Rotor (50) drehbar angeordnet ist, wobei im Gehäuse (11) eine Gasführungsstrecke (15) ausgebildet ist, die abschnittsweise über gegeneinander rotierende Förderelemente (65, 66) des Gehäuses (11) und des Rotors (50) führt und über eine zentrale Bohrung (56) des Rotors (50) zu einer Endlosstrecke vervollständigt ist, dadurch gekennzeichnet, daß der Rotor (50) beidendig in Radial-Gaslagern (32/51/54, 40/59/60) sowie einem Axial-Gaslager (33/52/53/56) gehalten ist, daß gehäusefeste Lagerschalen (31, 37) der Gaslager (32/51/54, 40/59/60, 33/52/53/56) über als Leitschaufeln (30, 36) ausgebildete Stützen mit dem Gehäuse (11) verbunden sind und daß die Förderelemente (65, 66) als Axialgebläse zwischen den Lagerschalen (31, 37) angeordnet sind.

2. Gebläse nach Anspruch 1, dadurch gekennzeichnet, daß eine Lagerschale (37) mit einer Statorwicklung (39) versehen ist, die mit einer auf dem Rotor (50) angeordneten Rotorwicklung (58) zusammenwirkt und daß ein zwischen Statorwicklung (39) und Rotorwicklung (58) vorhandener Luftspalt (60) zugleich als Radial-Gaslager (40/59/60) ausgebildet ist.

3. Gebläse nach Anspruch 1 oder 2, dadurch gekennzeichnet, daß an einer Lagerschale (31) ein Magnet mit einer ersten radialen Oberfläche (33) angeordnet ist, der einer zweiten radialen Oberfläche (52) am Rotor (50) gegenübersteht.

4. Gebläse nach Anspruch 3, dadurch gekennzeichnet, daß der Magnet ein Permanentmagnet (34) ist.

5. Gebläse nach einem der Ansprüche 1 bis 3, dadurch gekennzeichnet, daß die Leitschaufeln (30, 36) mit Kanälen (43, 44) zum Temperieren des umgewälzten Gases versehen sind.